# EUROPÄISCHE PATENTSCHRIFT

(11) **EP 1 731 669 B1**
(45) Veröffentlichungstag und Bekanntmachung des Hinweises auf die Patenterteilung: **23.05.2012**
(21) Anmeldenummer: 06112064.8
(22) Anmeldetag: 31.03.2006
(51) Int. Cl.: D21G 1/02, F16C 13/00

(54) **Biegeausgleichswalze**
Controlled deflection roll
Rouleau à compensation de flèche

(30) Priorität: 10.06.2005 DE 102005026907
(43) Veröffentlichungstag der Anmeldung: 13.12.2006
(73) Patentinhaber: Voith Patent GmbH, 89522 Heidenheim (DE)
(72) Erfinder: van Haag, Rolf. Dr., 47647, Kerken (DE); Beitelschmidt, Michael Prof. Dr., 01219, Dresden (DE)
(74) Vertreter: Manitz, Finsterwald & Partner GbR

(56) Entgegenhaltungen:
- DE-A1- 3 338 625
- DE-A1- 10 118 145
- US-A- 5 685 813

## Beschreibung

Die Erfindung betrifft eine Biegeausgleichswalze der im Oberbegriff des Anspruchs 1 angegebenen Art. Eine Biegeausgleichswalze dieser Art ist beispielsweise aus der DE-A-38 02 234 und der US-A-5 685 813 bekannt.

Zur Erhöhung der Dämpfung einer Biegeausgleichswalze kann vor jede hydrostatisch oder hydrodynamisch betriebene Stützquelle eine speziell gestaltete Vordrossel geschaltet werden, die mit dem Joch fest verbunden ist. Der Einsatz einer solchen Vordrossel ist beispielsweise in der DE 38 02 234 A ausführlich beschrieben.

In der Praxis hat sich nun aber gezeigt, dass die bekannten Dämpfungsdrosseln nur in einem begrenzten niedrigen Frequenzbereich funktionieren, der je nach konstruktiver Ausgestaltung der Drossel bis etwa 200 oder etwa 300 Hz reicht. Angesichts der heutzutage üblichen hochfrequenten Problemfrequenzen, die insbesondere an Kalanderwalzen im Zusammenhang mit dem sogenannten "Barring"-Problem oberhalb von etwa 300 Hz auftreten, besteht ein Bedarf an einer Modifizierung der betreffenden Dämpfungssysteme.

Der allgemeine Wirkungsmechanismus eines betreffenden herkömmlichen passiven Dämpfungssystems ergibt sich aus folgendem:
Bei einem relativ zum Joch schwingenden Walzenmantel wird über die am Walzenmantel verhältnismäßig steif angekoppelten Stützquellen Druckfluid, insbesondere Öl über die zuvor genannten Dämpfungsdrosseln hin und her geschoben. Durch die in den Drosseln entstehende Reibung wird dem System Schwingungsenergie entzogen.

Physikalisch stellt das zwischen Joch und Stützquelle eingespannte Ölvolumen eine Reihenschaltung aus Feder, Masse und Dämpfer dar. Dabei ist die Federsteifigkeit durch die Kompressibilität des eingespannten Ölvolumens bestimmt. Die Masse ist gleich der zu bewegenden Ölmasse, während sich der Dämpfer aus dem Strömungswiderstand der Vordrossel ergibt. Das jeweilige Dämpfungssystem muss so ausgelegt sein, dass in einem bestimmten Frequenzbereich der Strömungswiderstand möglichst hoch ist, aber dennoch genügend Öl über die Drosselstelle pulsieren kann. Ist die Drossel zu eng, so verhält sich die zwischen Joch und Stützquelle eingespannte Ölsäule überwiegend wie eine Feder. Ist sie zu weit, so ist der Strömungswiderstand klein und damit die Dämpfung gering.

Bei der aus der US-A-5 685 813 bekannten Biegeausgleichswalze ist der Mantel an seinen beiden Enden jeweils durch einander gegenüberliegende hydraulische Gleitlagerelemente am Joch gelagert, wobei der Mantel in der durch die einander gegenüberliegenden Gleitlagerelemente verlaufenden Wirkungsebene relativ zum Joch radial um eine bestimmte Strecke verschiebbar ist. Den hydraulischen Gleitlagerelementen ist jeweils ein Absperrventil zugeordnet, das über einen Begrenzungsdetektor geöffnet wird, sobald der Walzenmantel eine bestimmte Grenzlage erreicht hat, um das betreffende Gleitlagerelement mit einem Bremsdruck zu beaufschlagen und den Walzenmantel in der bestimmten Grenzlage zu stoppen. Sobald der Walzenmantel die bestimmte Grenzlage in der erwarteten Richtung wieder verlässt, wird das Absperrventil durch den Begrenzungsdetektor wieder geöffnet. Durch die Begrenzungsdetektoren werden die Bewegungen des Walzenmantels also nicht laufend gemessen, sie arbeiten vielmehr als reine Ein/Aus-Schalter, die jeweils nur dann aktiviert werden, wenn der Walzenmantel die jeweilige kritische Lage erreicht. Eine solche kritische Lage kann die Walze insbesondere dann erreichen, wenn sie im Übrigen nicht mehr angesteuert bzw. abgeschaltet wird.

In der DE 101 18 145 A1 ist eine Biegeausgleichswalze mit einem stationären Mantel beschrieben, der an seinen beiden Enden über hydraulische Gleitlager mit möglichst geringem radialen Spiel fest am Joch gelagert ist. Da aufgrund des nicht zu vermeidenden Spiels noch eine minimale Verlagerung des Mantels relativ zum Joch auftreten kann, ist für den Mantel eine Lageregelung vorgesehen. Dazu ist den beiden an einem jeweiligen Walzenende vorgesehenen, einander gegenüberliegenden Gleitlagerelementen ein Regelventil zugeordnet, über das ein zugeführtes Druckmedium so auf die beiden Gleitlagerelemente verteilt wird, dass ein die gewünschte Lage gewährleistendes Kräftegleichgewicht hergestellt wird. Zur Bestimmung der auf ein jeweiliges Gleitlagerelement wirkenden Kraft kann dessen Druck gemessen werden. Die ermittelten Lagerkräfte können zum Regeln der auf einen mit einer Gegenwalze gebildeten Spalt wirkenden Kräfte auf ein gewünschtes Niveau oder zur Fehlerdiagnostik verwendet werden.

In der DE 33 38 625 A1 ist ein Kalander mit mehreren übereinander angeordneten Walzen beschrieben, von denen wenigstens eine einen über Stützelemente an einem Joch abgestützten, relativ zu diesem verstellbaren Mantel besitzt, für den wieder eine Lageregelung vorgesehen ist. Dabei werden die Position des Mantels gemessen und der Mantel in eine vorgebbare Sollposition verbracht, um wahlweise einen oder mehrere darüber angeordnete Walzen von zugeordneten Anschlägen abzuheben oder auf diesen abzusetzen und entsprechend einen oder mehrere Walzenspalte zu schließen bzw. zu öffnen.

Der Erfindung liegt die Aufgabe zugrunde, eine verbesserte Biegeausgleichswalze der eingangs genannten Art zu schaffen, bei der insbesondere auch in höheren Frequenzbereichen (z.B. > 300 Hz) eine optimale Dämpfung gewährleistet ist.

Diese Aufgabe wird erfindungsgemäß durch die Merkmale des Anspruchs 1 gelöst.

Aufgrund dieser Ausbildung ist insbesondere auch für höhere Frequenzen eine optimale Dämpfung sichergestellt. Dies wird dadurch erreicht, dass insbesondere für diese höheren Frequenzen von der bisherigen passiven Dämpfung auf eine aktive Dämpfung übergegangen wird oder zusätzlich eine solche aktive Dämpfung vorgesehen ist. Bei dem hydraulischen Druck unter der Stützquelle kann es sich insbesondere um den Kolbendruck und beim hydraulischen Druck auf der Stützquelle im Fall einer hydrodynamisch betriebenen Stützquelle insbesondere um den Taschendruck handeln.

Bei einer bevorzugten praktischen Ausführungsform der erfindungsgemäßen Biegeausgleichswalze ist wenigstens ein Piezo-Stapel-Aktuator vorgesehen. Alternativ oder zusätzlich kann jedoch auch wenigstens ein elektromagnetisch ansteuerbarer Aktuator eingesetzt werden.

Gemäß einer weiteren vorteilhaften Ausführungsform ist zur Regelung des hydraulischen Drucks wenigstens ein piezo-gesteuertes Ventil vorgesehen, über das pulsierende Druckfluidmengen über einen Bypass ins Walzeninnere abspritzbar sind.

Üblicherweise ist die Stützquelle in einer im Joch vorgesehenen radialen Stützquellenbohrung radial beweglich dichtend geführt.

Bei einer bevorzugten praktischen Ausführungsform der erfindungsgemäßen Biegeausgleichswalze wird nun der Druckraum der Stützquelle über eine vorgeschaltete Drossel mit dem Druckfluid versorgt. In diesem Fall ist vorteilhafterweise wenigstens ein Aktuator in die der Stützquelle vorgeschaltete Drossel integriert. Dabei wird die Bewegung des Aktuators vorzugsweise über eine Membran auf die zwischen Drossel und Stützquelle vorgesehene Druckfluid- bzw. Ölsäule übertragen. Es ist beispielsweise auch eine Positionierung wenigstens eines Aktuators im Bereich des Druckraums seitlich im Joch denkbar.

Der Aktuator erzeugt über eine schwingende Bewegung, die über die Membran auf die Ölsäule zwischen Stützquelle und Joch bzw. Vordrossel übertragen wird, den zur Dämpfung der Schwingungsbewegungen der Biegeausgleichswalze phasenrichtigen dynamischen Druck auf den Walzenmantel. Die Kombination einer Vordrossel, d.h. Drosselstelle vor der Stützquelle mit wenigstens einem Aktuator ist insbesondere auch insoweit von Vorteil, als durch die Vordrossel der angekoppelte Versorgungskanal dynamisch vom Ölvolumen unter der Stützquelle abgekoppelt wird. In diesem Fall wird die Vordrossel zweckmäßigerweise nicht auf optimale Dämpfung, sondern auf höchste dynamische Ölsteifigkeit ausgelegt, damit die Wirkung des Aktuators maximiert wird. Unter Beachtung der Druckverluste zur Versorgung und beispielsweise zum beim Öffnen des Walzenspaltes erfolgenden Entsorgen der Stützquelle mit Öl ist die Drossel also so eng wie möglich auszulegen. Zudem kann durch eine entsprechende Gestaltung der Vordrossel das Ölvolumen unter der Stützquelle minimiert werden, was die Effektivität des Aktuators weiter erhöht. Ohne den Einsatz einer Vordrossel würde über den Aktuator auch das Ölvolumen im Versorgungskanal erregt werden, was eine Wellenausbreitung im Hydrauliksystem zur Folge hätte.

Bei einer bevorzugten praktischen Ausführungsform der erfindungsgemäßen Biegeausgleichswalze ist wenigstens ein Piezo-Stapel-Aktuator in die der Stützquelle vorgeschaltete Drossel integriert.

Demgegenüber ist zur Regelung des Taschendrucks einer jeweiligen hydrostatisch betriebenen Stützquelle vorteilhafterweise wenigstens ein Aktuator in die Stützquelle integriert. Dabei wird die Bewegung des Aktuators zweckmäßigerweise wieder über eine Membran auf das in der betreffenden Hydrostatiktasche enthaltene Druckfluid übertragen. Die Membran kann hierbei insbesondere einen Teil des Taschenbodens bilden.

Bei einer bevorzugten praktischen Ausführungsform der erfindungsgemäßen Biegeausgleichswalze ist wenigstens ein Piezo-Stapel-Aktuator in die Stützquelle integriert.

Die Mittel zur Regelung des hydraulischen Drucks umfassen zweckmäßigerweise eine elektronische Steuer- und/oder Regeleinheit.

Zur Regelung des hydraulischen Drucks muss die Bewegung des Walzenmantels erfasst werden. Dabei umfassen die betreffenden Mittel einen Beschleunigungssensor zum Messen der Beschleunigung der Stützquelle. Ist sichergestellt, dass die Stützquelle dem Walzenmantel ohne nennenswerte Phasenverschiebung folgt, so genügt in der Regel ein solcher Beschleunigungssensor. Da der dünne Ölspalt auf der Stützquelle wesentlich steifer ist als die Ölsäule unter der Stützquelle, ist die zuvor genannte Voraussetzung bis in relativ hohe Frequenz gegeben. Andernfalls, insbesondere bei noch höheren Frequenzen, muss zudem auch noch die Bewegung der Stützquelle relativ zum Walzenmantel erfasst werden. Gemäß einer entsprechenden praktischen Ausführungsform umfassen die Mittel zur Erfassung der Walzenmantelbewegung also sowohl einen Beschleunigungssensor zum Messen der Beschleunigung der Stützquelle als auch einen insbesondere induktiven Wegaufnehmer zur Bestimmung der Bewegung der Stützquelle relativ zum Walzenmantel. Mit der gemessenen absoluten Bewegung der Stützquelle und der gemessenen Relativbewegung lässt sich dann die absolute Bewegung des Walzenmantels berechnen, was zweckmäßigerweise über die Steuer- und/oder Regeleinheit erfolgt.

Eine weitere Variante zur messtechnischen Erfassung der Mantelbewegung zeichnet sich durch ein Laser-System aus. Mit einem solchen Laser-System kann eine Messung von außen erfolgen. Da bei den auftretenden hohen Frequenzen über die Walzenbreite auch gegenphasige Bewegungen am Walzenmantel auftreten können, umfasst das Laser-System vorteilhafterweise mehrere über die Walzenbreite verteilte Messköpfe.

Wie bereits erwähnt, kann als Druckfluid insbesondere Öl vorgesehen sein.

Die zuvor beschriebene Regelstrategie umfasst das Messen der Mantelbewegung sowie eine solche Regelung der hydraulischen Drücke, dass die Mantelschwingung minimiert wird. Zweckmäßigerweise ist wenigstens ein Drucksensor zur Erfassung des hydraulischen Druckes auf der Stützquelle bzw. des Taschendrucks vorgesehen. Ein solcher Drucksensor ist für die Regelungstechnik von Vorteil, da die Druckamplitude und Phasenlage auf die Mantelbewegung eingeregelt werden müssen. Dabei kann der Drucksensor insbesondere an der Stützquelle angebracht sein, wobei er bevorzugt im Taschenbereich der Stützquelle vorgesehen ist.

Es wird also eine aktive Dämpfung der Biegeausgleichswalze vorgeschlagen, bei der der hydraulische Druck in Abhängigkeit von der Walzenmantelbewegung (Schwingung) so geregelt wird, dass der statischen lastgebenden Kraft eine dämpfende dynamische Kraft überlagert wird. Dabei kann diese dämpfende dynamische Kraft auf beispielsweise zwei unterschiedliche Arten erzeugt werden, nämlich durch eine aktive Regelung des hydraulischen Drucks unter der Stützquelle (Kolbendruck) oder durch eine aktive Regelung des hydraulischen Drucks auf der Stützquelle (Taschendruck).

Die aktive Regelung der Drücke kann in beiden Fällen insbesondere über Piezo-Stapel-Aktuatoren erfolgen, wobei jedoch auch andere Aktuatoren wie beispielsweise elektromagnetisch angesteuerte Aktuatoren oder gar piezo-gesteuerte Ventile denkbar sind, die geringfügige pulsierende Ölmengen über einen Bypass ins Walzeninnere abspritzen.

Im Fall einer aktiven Regelung des hydraulischen Drucks unter der Stützquelle kann insbesondere ein Piezo-Stapel-Aktuator in die Baueinheit der der Stützquelle vorgeschalteten Drosselstelle integriert sein, wobei z.B. jedoch auch eine seitliche Positionierung des Aktuators im Joch denkbar ist.

Wird die dämpfende Kraft auf den Walzenmantel direkt durch die Regelung des Taschendrucks der Stützquelle erzeugt, so kann wenigstens ein Aktuator in die Stützquelle integriert sein. Auch in diesen Fall kann insbesondere wie ein Stapel-Aktuator bzw. Piezo-Stapel-Aktuator eingesetzt werden. Das zwischen dem Walzenmantel und der Stützquelle eingespannte Ölvolumen ist sehr klein, so dass die hydraulische Effektivität des Aktuators sehr gut ist. Da die Reaktionskräfte durch die Trägheitskräfte der Stützquelle (seismische Masse) und deren Abstützung auf der eingeschlossenen Ölsäule zwischen Stützquelle und Joch abgefangen werden müssen, ist diese Variante für die Dämpfung sehr hoher Frequenzen der ersten Variante überlegen.

Die Erfindung wird im Folgenden anhand von Ausführungsbeispielen unter Bezugnahme auf die Zeichnung näher erläutert; in dieser zeigen:
- Figur 1: eine schematische, geschnittene Teildarstellung einer beispielhaften Ausführungsform einer Biegeausgleichswalze mit einem in einer vorgeschalteten Drossel integrierten Aktuator,
- Figur 2: eine schematische, geschnittene Teildarstellung einer vergleichbaren Ausführungsform der Biegeausgleichswalze, wobei jedoch zusätzlich zu einem Beschleunigungssensor ein induktiver Wegaufnehmer vorgesehen ist, und
- Figur 3: eine schematische, geschnittene Teildarstellung einer weiteren Ausführungsform der Biegeausgleichswalze ohne vorgeschaltete Drossel sowie mit in der Stützquelle integrierten Aktuatoren.

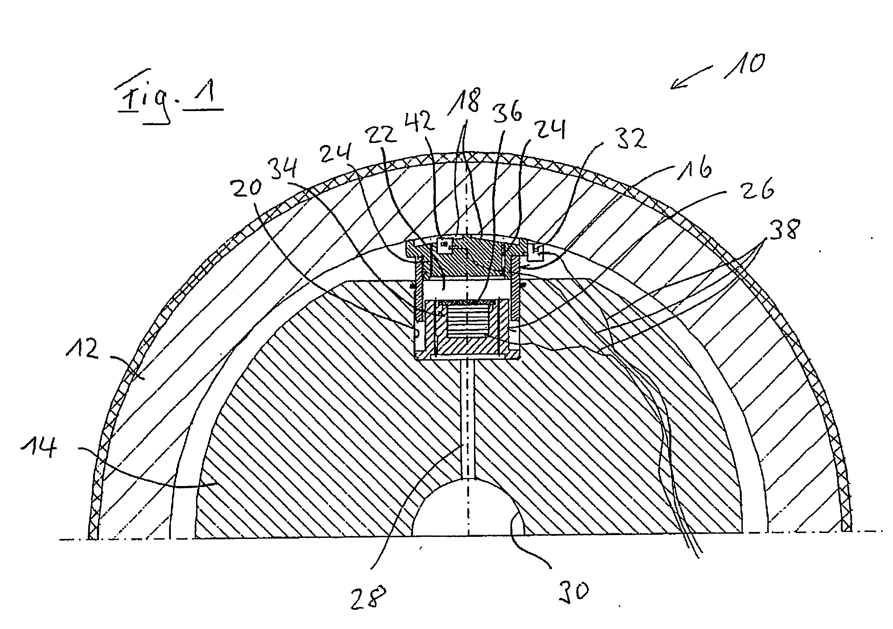

Figur 1 zeigt in schematischer, geschnittener Teildarstellung eine Biegeausgleichswalze 10, die einen umlaufenden Walzenmantel 12, ein den Walzenmantel 12 axial durchsetzendes drehfestes Joch 14 und wenigstens eine zwischen dem Joch 14 und dem Walzenmantel 12 angeordnete Stützquelle 16 umfasst.

Bei der Stützquelle 16 kann es sich insbesondere um eine hydrostatisch oder hydrodynamisch betriebene Stützquelle handeln. Im vorliegenden Fall ist wenigstens eine mantelseitig mit einer oder mehreren Hydrostatiktaschen 18 versehene hydrostatische Stützquelle 18 vorgesehen.

Wie anhand der Figur 1 zu erkennen ist, ist die Stützquelle 16 in einer im Joch 14 vorgesehenen radialen Stützquellenbohrung 20 radial beweglich dichtend geführt. Der Druckraum 22 der Stützquelle 16 ist mit jeweils wenigstens einer Drosselbohrung 24 mit den Hydrostatiktaschen 18 verbunden.

Der Druckraum 22 der Stützquelle 16 ist zur Dämpfung der Biegeausgleichswalze 10 über eine Drossel 26 mit Druckfluid, d.h. insbesondere Öl, versorgt, das über einen im Joch 14 vorgesehenen, der betreffenden Stützquelle 16 zugeordneten radialen Versorgungskanal 28 zugeführt wird. Der Versorgungskanal 28 erstreckt sich radial zwischen der Drossel 26 der betreffenden Stützquelle 16 und einer mehreren Stützquellen 16 gemeinsamen axialen Versorgungsleitung 30.

Über eine (nicht dargestellte) Steuer- und/oder Regeleinheit erfolgt eine aktive Dämpfung der Walzenmantelschwingungen, indem der hydraulische Druck in Abhängigkeit von der Walzenmantelbewegung so geregelt wird, dass eine sich der statischen lastgebenden Kraft F₀ überlagernde, die Mantelbewegung s(t) dämpfende dynamische Kraft F(t) erzeugt wird. Im vorliegenden Fall wird der hydraulische Druck p_{K}(t) unter der Stützquelle 16, d.h. der Kolbendruck entsprechend geregelt.

Dazu sind entsprechende Mittel zur Erfassung der Walzenmantelbewegung s(t) erforderlich, die im vorliegenden Fall einen Beschleunigungssensor 32 zum Messen der Beschleunigung der Stützquelle 16 umfassen.

Beim vorliegenden Ausführungsbeispiel wird also vorausgesetzt, dass die Stützquelle 16 dem Walzenmantel 12 ohne nennenswerte Phasenverschiebung folgt. Da der dünne Ölspalt auf der Stützquelle 16 wesentlich steifer ist als die Ölsäule unter der Stützquelle 16, ist dies bis in relativ hohe Frequenzbereiche gegeben.

Zur Regelung des hydraulischen Drucks p_{K}(t), hier also des Kolbendrucks, ist wenigstens ein Aktuator, im vorliegenden Fall beispielsweise ein Piezo-Stapel-Aktuator 34 vorgesehen, über den der hydraulische Druck p_{K}(t) entsprechend beeinflussbar ist.

Im vorliegenden Fall ist der Piezo-Stapel-Aktuator 34 in die der Stützquelle 16 vorgeschaltete Drossel 26 integriert. Dabei wird die Bewegung des Aktuators 34 über eine Membran 36 auf die zwischen Drossel 26 und Stützquelle 16 vorgesehene Druckfluid- bzw. Ölsäule übertragen.

Der Piezo-Stapel-Aktuator 34 erzeugt nun durch eine schwingende Bewegung, die über die Membran 36 auf die Ölsäule zwischen Stützquelle 16 und Joch 14 bzw. Drossel 26 übertragen wird, den zur Dämpfung der Mantelschwingungen phasenrichtigen dynamischen Druck auf den Walzenmantel 12. Die Kombination aus der Stützquelle 16 vorgeschalteter Drossel 26 und Piezo-Stapel-Aktuator 34 ist insbesondere auch insoweit von Vorteil, als durch die vorgeschaltete Drossel 26 der angekoppelte Versorgungskanal 28 dynamisch vom Ölvolumen unter der Stützquelle 16 abgekoppelt wird. Im vorliegenden Fall wird die vorgeschaltete Drossel 26 zweckmäßigerweise also nicht auf optimale Dämpfung, sondern auch höchste dynamische Ölsteifigkeit ausgelegt, damit die Wirkung des Aktuators 34 maximiert wird. Unter Beachtung der Druckverluste zur Versorgung und insbesondere zur beim Öffnen des Walzenspaltes erfolgenden Entsorgung der Stützquelle 16 mit Öl, ist die Drossel 26 demzufolge so eng wie möglich auszulegen. Durch eine entsprechende Gestaltung der vorgeschalteten Drossel 26 kann auch das Ölvolumen unter der Stützquelle 16 minimiert werden, was die Effektivität des Aktuators 36 ebenfalls erhöht. Ohne die vorgeschaltete Drossel 26 würde durch den Aktuator 34 auch das Ölvolumen im Vorsorgungskanal 28 erregt werden, was eine Wellenausbreitung im Hydrauliksystem zur Folge hätte.

Die hier angewandte Regelstrategie umfasst das Messen der Mantelbewegung sowie eine solche Regelung der hydraulischen Drücke, dass die Mantelschwingung minimiert wird. Zweckmäßigerweise ist wenigstens ein Drucksensor 42 zur Erfassung des hydraulischen Drucks auf der Stützquelle 16, d.h. zur Erfassung des Taschendrucks vorgesehen. Dies ist für die Regelungstechnik von Vorteil, da die Druckamplitude und Phasenlage auf die Mantelbewegung eingeregelt werden muss. Im vorliegenden Fall ist dieser Drucksensor 42 an der Stützquelle 16 angebracht. Wie in der Figur 1 zu erkennen ist, ist er im Taschenbereich der Stützquelle 16 vorgesehen.

Der Piezo-Stapel-Aktuator 34, der Drucksensor 42 sowie der Beschleunigungssensor 32 sind über elektrische Leitungen 38 mit der (nicht gezeigten) elektronischen Steuer- und/oder Regeleinheit verbunden.

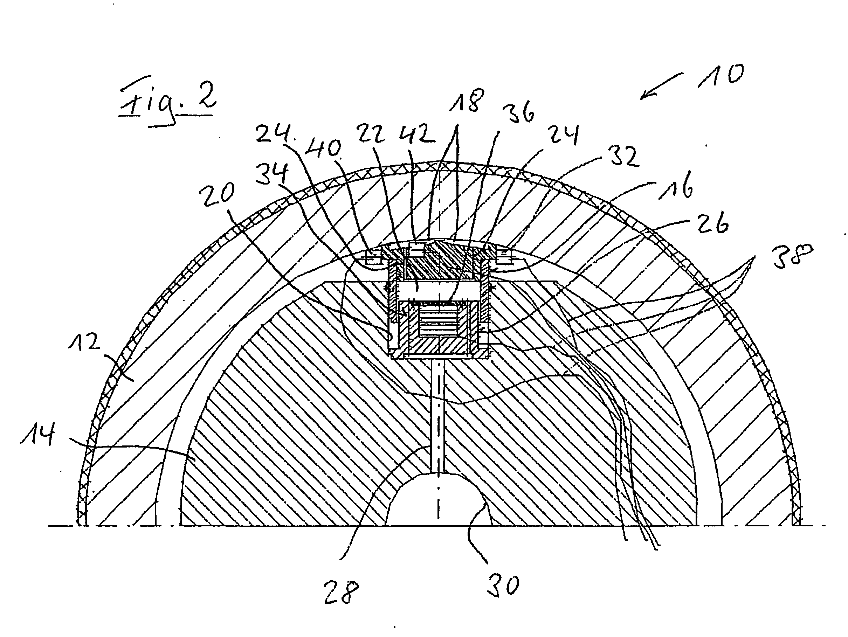

Figur 2 zeigt in schematischer, geschnittener Teildarstellung eine mit der Ausführung gemäß Figur 1 vergleichbare Ausführungsform. Im Unterschied zur Ausführung gemäß Figur 1 umfassen die Mittel zur Erfassung der Walzenmantelbewegung s(t) im vorliegenden Fall neben dem Beschleunigungssensor 32 zum Messen der Beschleunigung der Stützquelle 16 auch einen insbesondere induktiven Wegaufnehmer 40 zur Bestimmung der Bewegung der Stützquelle 16 relativ zum Walzenmantel 12. Dieser induktive Wegaufnehmer 40 ist ebenso wie der Beschleunigungssensor 32, der Drucksensor 42 sowie der Piezo-Stapel-Aktuator 34 wieder über eine entsprechende elektrische Leitung 38 mit der (nicht gezeigten) elektronischen Steuer- und/oder Regeleinheit verbunden.

Im vorliegenden Fall wird also zudem die Bewegung der Stützquelle 16 relativ zum Walzenmantel 12 erfasst, wozu zusätzlich neben dem Beschleunigungssensor 32 der induktive Wegaufnehmer 40 vorgesehen ist.

Mit der über den Beschleunigungssensor 32 gemessenen absoluten Bewegung der Stützquelle 16 und der über den induktiven Wegaufnehmer 40 gemessenen Bewegung der Stützquelle 16 relativ zum Walzenmantel 12 lässt sich die absolute Bewegung des Walzenmantels 12 berechnen. Die zusätzliche Erfassung der Relativbewegung kann insbesondere bei noch höheren Frequenzen erforderlich sein.

Im Übrigen kann die vorliegende Ausführungsform zumindest im Wesentlichen wieder den gleichen Aufbau wie die der Figur 1 besitzen. Einander entsprechenden Teilen sind gleiche Bezugszeichen zugeordnet.

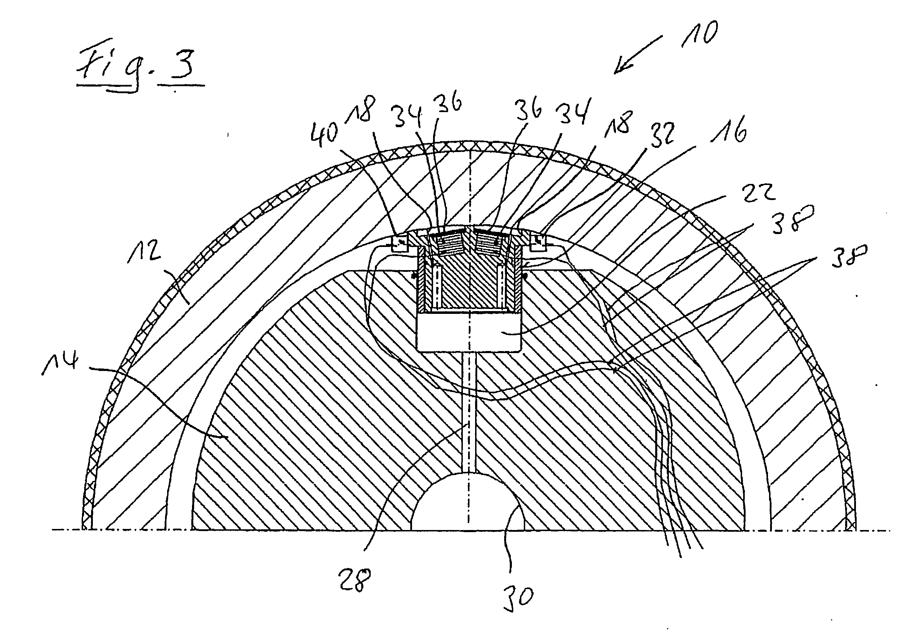

Figur 3 zeigt in schematischer, geschnittener Teildarstellung eine weitere Ausführungsform der Biegeausgleichswalze 10, wobei im vorliegenden Fall jedoch die vorgeschaltete Drossel fehlt und zumindest ein, im vorliegenden Fall mehrere Aktuatoren, bei denen es sich beispielsweise wieder um Piezo-Stapel-Aktuatoren 34 handeln kann, in der Stützquelle 16 integriert sind.

Im vorliegenden Fall wird über die Piezo-Stapel-Aktuatoren 34 also der hydraulische Druck auf der jeweiligen hydrostatisch betriebenen Stützquelle 16, d.h. der Taschendruck p_{T}(t) in Abhängigkeit von der erfassten Walzenmantelbewegung s(t) entsprechend geregelt.

Die Bewegung eines jeweiligen Aktuators 34 wird wieder über eine Membran 36 auf das in der betreffenden Hydrostatiktasche 18 enthaltene Druckfluid übertragen.

Wie anhand der Figur 3 zu erkennen ist, bildet die Membran 36 einen Teil des betreffenden Taschenbodens. Die Drosselbohrungen 24, über die die Hydrostatiktaschen 18 mit dem Druckraum 22 verbunden sind, münden jeweils im von der Membran 36 freien Bereich des Taschenbodens in die jeweilige Hydrostatiktasche 18. Auch im vorliegenden Fall ist außer dem Beschleunigungssensor 32 beispielsweise wieder ein insbesondere induktiver Wegaufnehmer 40 vorgesehen.

Der Beschleunigungssensor 32, der induktive Wegaufnehmer 40 sowie die Piezo-Stapel-Aktuatoren 34 sind jeweils wieder über elektrische Leitungen 38 mit der (nicht gezeigten) elektronischen Steuer- und/oder Regeleinheit verbunden.

Im vorliegenden Fall wird die die Mantelschwingungen dämpfende Kraft auf den Walzenmantel also direkt durch die Regelung des Taschendrucks p_{T}(t) der Stützquelle 16 erzeugt, wozu die Stützquelle 16 mit integrierten Aktuatoren, im vorliegenden beispielsweise Piezo-Stapel-Aktuatoren 34 versehen ist. Das zwischen dem Walzenmantel 12 und der Stützquelle 16 eingespannte Ölvolumen ist sehr klein, so dass die hydraulische Effektivität der Aktuatoren 34 sehr gut ist. Da die Reaktionskräfte durch die Trägheitskräfte der Stützquelle 16 (seismische Masse) und deren Abstützung auf der eingeschlossenen Ölsäule zwischen Stützquelle 16 und Joch 14 abgefangen werden müssen, ist diese Variante für die Dämpfung sehr hoher Frequenzen der zuvor beschriebenen Variante überlegen.

Im Übrigen kann die vorliegende Ausführungsform zumindest im Wesentlichen wieder den gleichen Aufbau wie die der Figur 1 besitzen. Einander entsprechenden Teilen sind gleiche Bezugszeichen zugeordnet.

### Bezugszeichenliste

- 10: Biegeausgleichswalze
- 12: Walzenmantel
- 14: Joch
- 16: Stützquelle
- 18: Hydrostatiktasche
- 20: Stützquellenbohrung
- 22: Druckraum
- 24: Drosselbohrung
- 26: Drossel
- 28: Versorgungskanal
- 30: Versorgungsleitung
- 32: Beschleunigungssensor
- 34: Piezo-Stapel-Aktuator
- 36: Membran
- 38: elektrische Leitung
- 40: induktiver Wegaufnehmer
- 42: Drucksensor

## Patentansprüche

1. Biegeausgleichswalze (10) mit einem umlaufenden Walzenmantel (12), einem den Walzenmantel (12) axial durchsetzenden drehfesten Joch (14) und wenigstens einer zwischen dem Joch (14) und dem Walzenmantel (12) angeordneten hydraulischen Stützquelle (16)
**dadurch gekennzeichnet,**
**dass** Mittel zur Erfassung einer Walzenmantelschwingungsbewegung (s(t)) sowie Mittel zur Regelung eines hydraulischen Drucks (p_{K}(t)) unter der Stützquelle (16) und/oder zur Regelung des hydraulischen Drucks (p_{T}(t)) auf der Stützquelle (16) in Abhängigkeit von der erfassten Walzenmantelschwingungsbewegung (s(t)) vorgesehen sind, wobei die Mittel zur Erfassung der Walzenmantelschwingungsbewegung (s(t)) einen Beschleunigungssensor (32) zum Messen der Beschleunigung der Stützquelle (16) umfassen, zur Regelung des hydraulischen Drucks (p_{K}(t), p_{T}(t)) wenigstens ein Aktuator (34) vorgesehen ist, über den der hydraulische Druck (p_{K}(t), p_{T}(t)) entsprechend beeinflussbar ist, und die Regelung des hydraulischen Drucks ((p_{K}(t), p_{T}(t)) so erfolgt, dass der wenigstens eine Aktuator (34) einen die Mantelschwingungsbewegung (s(t)) dämpfenden phasenrichtigen dynamischen Druck auf den Walzenmantel (12) erzeugt.

2. Biegeausgleichswalze nach Anspruch 1,
**dadurch gekennzeichnet,**
**dass** der zu regelnde hydraulische Druck unter der Stützquelle (16) der Kolbendruck (p_{K}(t)) der Stützquelle ist.

3. Biegeausgleichswalze nach einem der vorhergehenden Ansprüche,
**dadurch gekennzeichnet,**
**dass** die Stützquelle hydrostatisch betrieben und auf der Seite des Walzenmantels entsprechend mit wenigstens einer Hydrostatiktasche versehen ist und dass der zu regelnde hydraulische Druck auf der Stützquelle der Taschendruck (p_{T}(t)) ist.

4. Biegeausgleichswalze nach einem der vorhergehenden Ansprüche,
**dadurch gekennzeichnet,**
**dass** zur Regelung des hydraulischen Drucks (p_{K}(t), p_{T}(t)) wenigstens ein Piezo-Stapel-Aktuator (34) vorgesehen ist.

5. Biegeausgleichswalze nach einem der vorhergehenden Ansprüche,
**dadurch gekennzeichnet,**
**dass** wenigstens ein elektromagnetisch ansteuerbarer Aktuator vorgesehen ist.

6. Biegeausgleichswalze nach einem der vorhergehenden Ansprüche,
**dadurch gekennzeichnet,**
**dass** zur Regelung des hydraulischen Drucks (p_{K}(t), p_{T}(t)) wenigstens ein piezo-gesteuertes Ventil vorgesehen ist, über das pulsierende Druckfluidmengen über einen Bypass ins Walzeninnere abspritzbar sind.

7. Biegeausgleichswalze nach einem der vorhergehenden Ansprüche,
**dadurch gekennzeichnet,**
**dass** die Stützquelle (16) in einer im Joch vorgesehenen radialen Stützquellenbohrung (20) radial beweglich dichtend geführt ist und deren Druckraum (22) über eine vorgeschaltete Drossel (26) mit dem Druckfluid versorgt wird.

8. Biegeausgleichswalze nach Anspruch 7,
**dadurch gekennzeichnet,**
**dass** wenigstens ein Aktuator (34) in die der Stützquelle (16) vorgeschaltete Drossel (26) integriert ist.

9. Biegeausgleichswalze nach Anspruch 8,
**dadurch gekennzeichnet,**
**dass** die Bewegung des Aktuators (34) über eine Membran (36) auf die zwischen Drossel (26) und Stützquelle (16) vorgesehene Druckfluidsäule übertragen wird.

10. Biegeausgleichswalze nach Anspruch 8 oder 9,
**dadurch gekennzeichnet,**
**dass** wenigstens ein Piezo-Stapel-Aktuator (34) in die der Stützquelle (16) vorgeschaltete Drossel (26) integriert ist.

11. Biegeausgleichswalze nach einem der vorhergehenden Ansprüche,
**dadurch gekennzeichnet,**
**dass** die Stützquelle (16) in einer im Joch (14) vorgesehenen radialen Stützquellenbohrung (20) radial beweglich dichtend geführt ist und dass wenigstens ein Aktuator im Bereich des Druckraumes (22) seitlich im Joch (14) positioniert ist.

12. Biegeausgleichswalze nach einem der vorhergehenden Ansprüche 3 bis 11,
**dadurch gekennzeichnet,**
**dass** zur Regelung des Taschendrucks (p_{T}(t)) einer jeweiligen hydrostatisch betriebenen Stützquelle (16) wenigstens ein Aktuator (34) in die Stützquelle (16) integriert ist.

13. Biegeausgleichswalze nach Anspruch 12,
**dadurch gekennzeichnet,**
**dass** die Bewegung des Aktuators (34) über eine Membran (36) auf das in der betreffenden Hydrostatiktasche (18) enthaltene Druckfluid übertragen wird.

14. Biegeausgleichswalze nach Anspruch 13,
**dadurch gekennzeichnet,**
**dass** die Membran (36) einen Teil des Taschenbodens bildet.

15. Biegeausgleichswalze nach einem der Ansprüche 12 bis 14,
**dadurch gekennzeichnet,**
**dass** wenigstens ein Piezo-Stapel-Aktuator (34) in die Stützquelle (16) integriert ist.

16. Biegeausgleichswalze nach einem der vorhergehenden Ansprüche,
**dadurch gekennzeichnet,**
**dass** die Mittel zur Regelung des hydraulischen Drucks ((p_{K}(t), p_{T}(t)) eine elektronische Steuer- und/oder Regeleinheit umfassen.

17. Biegeausgleichswalze nach einem der vorhergehenden Ansprüche,
**dadurch gekennzeichnet,**
**dass** die Mittel zur Erfassung der Walzenmantelbewegung (s(t)) einen insbesondere induktiven Wegaufnehmer (40) zur Bestimmung der Bewegung der Stützquelle (16) relativ zum Walzenmantel (12) umfassen.

18. Biegeausgleichswalze nach einem der vorhergehenden Ansprüche,
**dadurch gekennzeichnet,**
**dass** die Mittel zur Erfassung der Walzenmantelbewegung (s(t)) sowohl einen Beschleunigungssensor (32) zum Messen der Beschleunigung der Stützquelle (16) als auch einen insbesondere induktiven Wegaufnehmer (40) zur Bestimmung der Bewegung der Stützquelle (16) relativ zum Walzenmantel (12) umfassen.

19. Biegeausgleichswalze nach einem der vorhergehenden Ansprüche,
**dadurch gekennzeichnet,**
**dass** die Mittel zur Erfassung der Walzenmantelbewegung (s(t)) ein Lasersystem umfassen.

20. Biegeausgleichswalze nach Anspruch 19,
**dadurch gekennzeichnet,**
**dass** das Lasersystem mehrere über die Walzenbreite verteilte Messköpfe umfasst.

21. Biegeausgleichswalze nach einem der vorhergehenden Ansprüche,
**dadurch gekennzeichnet,**
**dass** als Druckfluid Öl vorgesehen ist.

22. Biegeausgleichswalze nach einem der vorhergehenden Ansprüche,
**dadurch gekennzeichnet,**
**dass** wenigstens ein Drucksensor (42) zur Erfassung des hydraulischen Drucks auf der Stützquelle (16) vorgesehen ist.

23. Biegeausgleichswalze nach Anspruch 22,
**dadurch gekennzeichnet,**
**dass** der Drucksensor (42) an der Stützquelle (16) angebracht ist.

24. Biegeausgleichswalze nach Anspruch 22 oder 23,
**dadurch gekennzeichnet,**
**dass** der Drucksensor (42) im Taschenbereich der Stützquelle (16) vorgesehen ist.

## Claims

1. A deflection compensation roll (10) having a revolving roll jacket (12), a rotationally fixed yoke (14) axially passing through the roll jacket (12) and at least one hydraulic support element (16) arranged between the yoke (14) and the roll jacket (12),
**characterised in that**
means are provided for detecting a roll jacket oscillation movement (s(t)) as well as means for regulating a hydraulic pressure (p_{K}(t)) beneath the support element (16) and/or for regulating the hydraulic pressure (p_{T}(t)) on the support element (16) in dependence on the detected roll jacket oscillation movement (s(t)), with the means for detecting the roll jacket oscillation movement (s(t)) including an accelerometer (32) for measuring the acceleration of the support element (16), with at least one actuator (34) being provided for regulating the hydraulic pressure (p_{K}(t), p_{T}(t)) and the hydraulic pressure (p_{K}(t), p_{T}(t)) being correspondingly influenceable via said at least one actuator, and with the regulation of the hydraulic pressure ((p_{K}(t), p_{T}(t)) taking place such that the at least one actuator (34) generates a dynamic pressure of the correct phase on the roll jacket (12) which damps the jacket oscillation movement (s(t)).

2. A deflection compensation roll in accordance with claim 1,
**characterised in that**
the hydraulic pressure to be regulated beneath the support element (16) is the piston pressure (p_{K}(t)) of the support element.

3. A deflection compensation roll in accordance with one of the preceding claims,
**characterised in that**
the support element is hydrostatically operated and is accordingly provided with at least one hydrostatic pocket at the side of the roll jacket; and **in that** the hydraulic pressure to be regulated on the support element is the pocket pressure (p_{T}(t)).

4. A deflection compensation roll in accordance with any one of the preceding claims,
**characterised in that**
at least one piezo stack actuator (34) is provided to regulate the hydraulic pressure (p_{K}(t), (p_{T}(t)).

5. A deflection compensation roll in accordance with any one of the preceding claims,
**characterised in that**
at least one electromagnetically controllable actuator is provided.

6. A deflection compensation roll in accordance with any one of the preceding claims,
**characterised in that**
at least one piezo-controlled valve via which the pulsing pressure fluid amounts can be injected into the roll interior via a bypass is provided to regulate the hydraulic pressure (p_{K}(t), p_{T}(t)).

7. A deflection compensation roll in accordance with any one of the preceding claims,
**characterised in that**
the support element (16) is sealingly guided in a radially movable manner in a radial support element bore (20) provided in the yoke and its pressure space (22) is supplied with the pressure fluid via an interposed restrictor (26).

8. A deflection compensation roll in accordance with claim 7,
**characterised in that**
at least one actuator (34) is integrated into the restrictor (26) interposed in front of the support element (16).

9. A deflection compensation roll in accordance with claim 8,
**characterised in that**
the movement of the actuator (34) is transferred via a membrane (36) to the pressure fluid column provided between the restrictor (26) and the support element (16).

10. A deflection compensation roll in accordance with claim 8 or claim 9,
**characterised in that**
at least one piezo stack actuator (34) is integrated into the restrictor (26) interposed in front of the support element (16).

11. A deflection compensation roll in accordance with any one of the preceding claims,
**characterised in that**
the support element (16) is sealingly guided in a radially movable manner in a radial support element bore (20) provided in the yoke (14); and **in that** at least one actuator is positioned in the region of the pressure space (22) laterally in the yoke (14).

12. A deflection compensation roll in accordance with any one of the preceding claims 3 to 11,
**characterised in that**
at least one actuator (34) is integrated into the support element (16) for regulating the pocket pressure (p_{T}(t)) of a respective hydrostatically operated support element (16).

13. A deflection compensation roll in accordance with claim 12,
**characterised in that**
the movement of the actuator (34) is transferred via a membrane (36) onto the pressure fluid contained in the respective hydrostatic pocket (18).

14. A deflection compensation roll in accordance with claim 13,
**characterised in that**
the membrane (36) forms a part of the pocket base.

15. A deflection compensation roll in accordance with any one of the claims 12 to 14,
**characterised in that**
at least one piezo stack actuator (34) is integrated into the support element (16).

16. A deflection compensation roll in accordance with any one of the preceding claims,
**characterised in that**
the means for regulating the hydraulic pressure ((p_{K}(t), p_{T}(t)) include an electronic control and/or regulation unit.

17. A deflection compensation roll in accordance with any one of the preceding claims,
**characterised in that**
the means for detecting the roll jacket movement (s(t)) include a position encoder, in particular an inductive position encoder (40), for determining the movement of the support element (16) relative to the roll jacket (12).

18. A deflection compensation roll in accordance with any one of the preceding claims,
**characterised in that**
the means for detecting the roll jacket movement (s(t)) include both an accelerometer (32) for measuring the acceleration of the support element (16) and a position encoder, in particular an inductive position encoder (40), for determining the movement of the support element (16) relative to the roll jacket (12).

19. A deflection compensation roll in accordance with any one of the preceding claims,
**characterised in that**
the means for detecting the roll jacket movement (s(t)) include a laser system.

20. A deflection compensation roll in accordance with claim 19,
**characterised in that**
the laser system includes a plurality of measuring heads distributed over the roll width.

21. A deflection compensation roll in accordance with any one of the preceding claims,
**characterised in that**
oil is provided as the pressure fluid.

22. A deflection compensation roll in accordance with any one of the preceding claims,
**characterised in that**
at least one pressure sensor (42) is provided for detecting the hydraulic pressure on the support element (16).

23. A deflection compensation roll in accordance with claim 22,
**characterised in that**
the pressure sensor (42) is attached to the support element (16).

24. A deflection compensation roll in accordance with claim 22 or claim 23,
**characterised in that**
the pressure sensor (42) is provided in the pocket region of the support element (16).

## Revendications

1. Cylindre à compensation de flèche (10) comprenant une enveloppe de cylindre périphérique (12), une poutre (14) fixe en rotation et traversant axialement l'enveloppe de cylindre (12), et au moins une source de soutien hydraulique (16) agencée entre la poutre (14) et l'enveloppe de cylindre (12),
**caractérisé en ce que**,
il est prévu des moyens pour détecter un mouvement oscillant (s(t)) de l'enveloppe de cylindre ainsi que des moyens pour réguler une pression hydraulique (p_{K}(t)) au-dessous de la source de soutien (16) et/ou pour réguler la pression hydraulique (p_{T}(t)) sur la source de soutien (16) en fonction du mouvement oscillant (s(t)) de l'enveloppe de cylindre, lesdits moyens pour détecter le mouvement oscillant (s(t)) de l'enveloppe de cylindre incluant un capteur d'accélération (32) pour mesurer l'accélération de la source de soutien (16), **en ce que** pour la régulation de la pression hydraulique (p_{K}(t), p_{T}(t)) il est prévu au moins un actionneur (34) via lequel la pression hydraulique (p_{K}(t), p_{T}(t)) est susceptible d'être influencée de façon correspondante, et la régulation de la pression hydraulique (p_{K}(t), p_{T}(t)) est effectuée de telle façon que ledit au moins un actionneur (34) engendre sur l'enveloppe de cylindre (12) une pression dynamique correctement phasée qui amortit le mouvement oscillant (s(t)) de l'enveloppe.

2. Cylindre à compensation de flèche selon la revendication 1,
**caractérisé en ce que** la pression hydraulique à réguler au-dessous de la source de soutien (16) est la pression du piston (p_{K}(t)) de la source de soutien.

3. Cylindre à compensation de flèche selon l'une des revendications précédentes,
**caractérisé en ce que** la source de soutien fonctionne de manière hydrostatique et **en ce qu'**il est prévu, sur le côté de l'enveloppe de cylindre, de manière correspondante au moins une poche hydrostatique, et **en ce que** la pression hydraulique à réguler sur la source de soutien est la pression dans la poche (p_{T}(t)).

4. Cylindre à compensation de flèche selon l'une des revendications précédentes,
**caractérisé en ce qu'**il est prévu au moins un actionneur à empilement piézoélectrique (34) pour la régulation de la pression hydraulique (p_{K}(t), p_{T}(t)).

5. Cylindre à compensation de flèche selon l'une des revendications précédentes,
**caractérisé en ce qu'**il est prévu au moins un actionneur à pilotage électromagnétique.

6. Cylindre à compensation de flèche selon l'une des revendications précédentes,
**caractérisé en ce que** pour la régulation de la pression hydraulique (p_{K}(t), p_{T}(t)) il est prévu au moins une valve à commande piézoélectrique, via laquelle des quantités de fluide sous pression pulsatoire peuvent être pulvérisées à l'intérieur du cylindre via un bypass.

7. Cylindre à compensation de flèche selon l'une des revendications précédentes,
**caractérisé en ce que** la source de soutien (16) est guidée de façon étanche et radialement mobile dans un perçage radial (20) prévu dans la poutre, et dont la chambre de pression (22) est alimentée avec le fluide sous pression via un étranglement en amont (26).

8. Cylindre à compensation de flèche selon la revendication 7,
**caractérisé en ce qu'**au moins un actionneur (34) est intégré dans l'étranglement (26) en amont de la source de soutien (16).

9. Cylindre à compensation de flèche selon la revendication 8,
**caractérisé en ce que** le mouvement de l'actionneur (34) est transmis via une membrane (36) à la colonne de fluide sous pression prévue entre l'étranglement (26) et la source de soutien (16).

10. Cylindre à compensation de flèche selon la revendication 8 ou 9,
**caractérisé en ce qu'**au moins un actionneur à empilement piézoélectrique (34) est intégré dans l'étranglement (26) en amont de la source de soutien (16).

11. Cylindre à compensation de flèche selon l'une des revendications précédentes,
**caractérisé en ce que** la source de soutien (16) est guidée de façon étanche et radialement mobile dans un perçage radial (20) prévu dans la poutre (14), et **en ce qu'**au moins un actionneur est positionné dans la région de la chambre de pression (22) latéralement dans la poutre (14).

12. Cylindre à compensation de flèche selon l'une des revendications précédentes 3 à 11,
**caractérisé en ce que** pour la régulation de la pression dans la poche (p_{T}(t)) d'une source de soutien (16) respective à fonctionnement hydrostatique, au moins un actionneur (34) est intégré dans la source de soutien (16).

13. Cylindre à compensation de flèche selon la revendication 12,
**caractérisé en ce que** le mouvement de l'actionneur (34) est transmis via une membrane (36) au fluide sous pression contenu dans la poche hydraulique concernée (18).

14. Cylindre à compensation de flèche selon la revendication 13,
**caractérisé en ce que** la membrane (36) forme une partie du fond de la poche.

15. Cylindre à compensation de flèche selon l'une des revendications 12 à 14,
**caractérisé en ce qu'**au moins un actionneur à empilement piézoélectrique (34) est intégré dans la source de soutien (16).

16. Cylindre à compensation de flèche selon l'une des revendications précédentes,
**caractérisé en ce que** les moyens pour la régulation de la pression hydraulique (p_{K}(t), p_{T}(t)) comprennent une unité de commande et/ou de régulation électronique.

17. Cylindre à compensation de flèche selon l'une des revendications précédentes,
**caractérisé en ce que** les moyens pour détecter le mouvement de l'enveloppe de cylindre (s(t)) comprennent un capteur de course (40), en particulier inductif, pour déterminer le mouvement de la source de soutien (16) par rapport à l'enveloppe de cylindre (12).

18. Cylindre à compensation de flèche selon l'une des revendications précédentes,
**caractérisé en ce que** les moyens pour détecter le mouvement de l'enveloppe de cylindre (s(t)) comprennent à la fois un capteur d'accélération (32) pour mesurer l'accélération de la source de soutien (16) et un capteur de course (40), en particulier inductif, pour déterminer le mouvement de la source de soutien (16) par rapport à l'enveloppe de cylindre (16).

19. Cylindre à compensation de flèche selon l'une des revendications précédentes,
**caractérisé en ce que** les moyens pour détecter le mouvement de l'enveloppe de cylindre (s(t)) comprennent un système laser.

20. Cylindre à compensation de flèche selon la revendication 19,
**caractérisé en ce que** le système laser comprend plusieurs têtes de mesure réparties sur la largeur du cylindre.

21. Cylindre à compensation de flèche selon l'une des revendications précédentes,
**caractérisé en ce qu'**il est prévu de l'huile a titre de fluide sous pression.

22. Cylindre à compensation de flèche selon l'une des revendications précédentes,
**caractérisé en ce qu'**il est prévu au moins un capteur de pression (42) pour déterminer la pression hydraulique sur la source de soutien (16).

23. Cylindre à compensation de flèche selon la revendication 22,
**caractérisé en ce que** le capteur de pression (42) est monté sur la source de soutien (16).

24. Cylindre à compensation de flèche selon la revendication 22 ou 23,
**caractérisé en ce que** le capteur de pression (42) est prévu dans la région de la poche de la source de soutien (16).
